# EUROPÄISCHE PATENTSCHRIFT

(11) **EP 1 805 887 B1**
(45) Veröffentlichungstag und Bekanntmachung des Hinweises auf die Patenterteilung: **19.01.2011**
(21) Anmeldenummer: 05794583.4
(22) Anmeldetag: 13.10.2005
(51) Int. Cl.: H02P 9/30

(54) **STATISCHES ERREGERSYSTEM FÜR EINEN GENERATOR SOWIE VERFAHREN ZUM BETRIEB EINES SOLCHEN ERREGERSYSTEMS**
STATIC EXCITATION SYSTEM FOR A GENERATOR AND METHOD FOR OPERATION OF SUCH AN ENERGISING SYSTEM
SYSTEME D'EXCITATION STATIQUE POUR UNE GENERATRICE ET PROCEDE DE FONCTIONNEMENT D'UN SYSTEME D'EXCITATION DE CE TYPE

(30) Priorität: 28.10.2004 CH 17802004
(43) Veröffentlichungstag der Anmeldung: 11.07.2007
(73) Patentinhaber: Alstom Technology Ltd, 5400 Baden (CH)
(72) Erfinder: JOHO, Reinhard, CH-5022 Rombach (CH)
(86) Internationale Anmeldenummer: PCT/EP2005/055231
(87) Internationale Veröffentlichungsnummer: WO 2006/045703

(56) Entgegenhaltungen:
- GB-A- 1 359 130
- SU-A1- 408 448
- SU-A1- 1 312 715

## Beschreibung

### TECHNISCHES GEBIET

Die vorliegende Erfindung bezieht sich auf das Gebiet der Generatortechnik. Sie betrifft ein statisches Erregersystem gemäss dem Oberbegriff des Anspruchs 1 sowie ein Verfahren zum Betrieb eines solchen Erregersystems.

### STAND DER TECHNIK

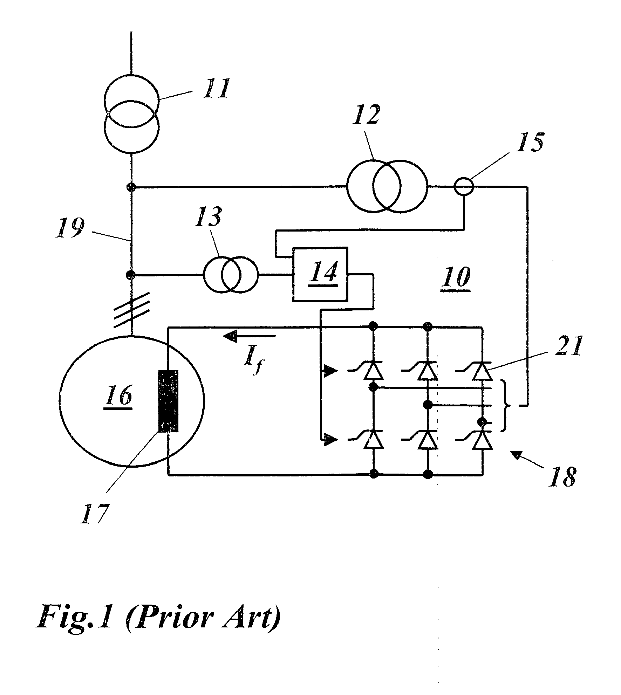

Statische Erregersysteme zur Speisung der Feldwicklung eines Generators werden in breitem Umfang eingesetzt. Sie zeichnen sich durch ihre Robustheit und eine kurze Ansprechzeit aus. Ein statisches Erregersystem der bekannten Art ist in Fig. 1 wiedergegeben. Das statische Erregersystem 10 der Fig. 1 ist einem Generator 16 zugeordnet, der über eine (3-phasige) Sammelschiene 19 und einen Maschinentransformator 11 an ein (in Fig. 1 nicht eingezeichnetes) Netz angeschlossen ist. Das statische Erregersystem 10 dient zur Speisung der Feldwicklung 17 des Generators 16. Es umfasst einen an die Sammelschiene 19 angeschlossenen Erregertransformator 12, dessen Ausgangswechselspannung mittels einer mit Thyristoren 21 bestückten Thyristorbrücke 18 in eine Gleichspannung umgewandelt wird. Die Ansteuerung der Thyristoren 21 der Thyristorbrücke 18 und damit die Steuerung der Höhe der Gleichspannung erfolgt durch einen automatischen Spannungsregler (Automated Voltage Regulator AVR) 14 nach Massgabe der an der Sammelschiene 19 anstehenden und über einen Spannungswandler 13 abgegriffenen Generatorspannung und des in der Erregungseinrichtung 10 fliessenden und über einen Stromwandler 15 gemessenen Stromes. Die von der Thyristorbrücke 18 erzeugte Gleichspannung treibt einen Feldstrom I_{f} durch die Feldwicklung 17.

Die Antwort des Erregersystems 10 wird durch eine Überdimensionierung der Ausgangsspannung des Erregertransformators 12 verstärkt, so dass durch einen vorübergehenden Übergang zur Vollwellensteuerung der Thyristorbrücke 18 die notwendige Stromsteilheit dl_{f}/dt (Ansprechzeit; engl.: "response time") und der notwendige Maximalwert I_{fmax} (kurzzeitige Blindleistungserhöhung) sichergestellt werden kann. Der entsprechende Plafondfaktor (engl.: "ceiling factor"), d.h. das Verhältnis von maximaler Feldspannung zu Nennfeldspannung, liegt im Bereich von 1,5 bis 2,0. Ein solcher Grenzwert ist allgemein üblich, um mit normalen Netzstörungen fertig zu werden.

Trotz dieser Überdimensionierung treten bei den herkömmlichen statischen Erregersystemen aus folgenden Gründen Probleme auf: Netzstörungen werden häufig durch Kurzschlüsse in den Übertragungsleitungen hervorgerufen. Solche Kurzschlüsse verringern die Spannung in der näheren Netzumgebung und in den nahe gelegenen Kraftwerken. Da der Erregertransformator aus der Sammelschiene des Generators gespeist wird, sieht er ebenfalls eine abgesenkte Spannung. Bei erfolgreicher Kurzschluss-Fortschaltung innerhalb eines vorgegebenen Zeitfensters kann eine automatische Wiederzuschaltung auf das Netz erfolgen. Zur Wahrung der Stabilität des Systems Generator-Netz nach der Wiederzuschaltung wäre es wünschenswert, einen kurzzeitigen Blindleistungsstoss in das wiederkehrende Netz einzuführen. Dies erfordert, dass der Generator sich in einem übererregten Zustand befindet. Das ist jedoch nur teilweise erreichbar, weil die während des Kurzschlusses und kurz danach verbleibende Spannung den Aufbau einer kurzzeitigen Feldstromüberhöhung nicht erlaubt. Selbst der eingebaute Plafondfaktor kann in diesem Zeitraum nicht unter allen Umständen für eine ausreichende Erregung sorgen.

In der Druckschrift US-A-3,818,317 wird die Serieneinspeisung einer Kondensatorspannung in die analoge Signalschleife des Erregersystems beschrieben. Diese Einspeisung wird getriggert durch ein die Generatorspannung abtastendes Unterspannungs-Relais. Das so veränderte Signal liegt am Eingang des automatischen Spannungsreglers (AVR). Eine kurzzeitige Erhöhung der Leistung im Erregerkreis durch Einspeisen aus einer zusätzlichen Energiequelle wird nicht erwähnt.

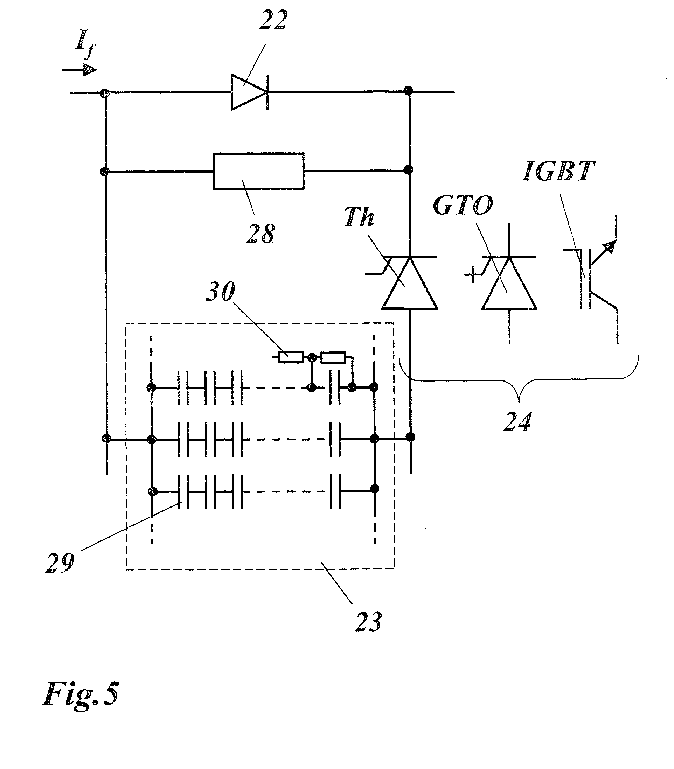

Die US-B1-6,339,316 beschreibt einerseits eine Kondensator-gestützte unterbrechungsfreie Stromversorgung auf der Wechselspannungsseite der Erregerversorgung (Fig. 1-4), und andererseits einen mit Gleichstrom geladenen Kondensator, der parallel zur Versorgungsleitung für die Feldwicklung geschaltet wird (Fig. 5-8). In beiden Anordnungen wird die Verfügbarkeit des Generators massiv beeinträchtigt, weil die volle Erregung ausfällt, wenn eine der beschriebenen Komponenten der Anordnungen ausfällt. Der an die Feldwicklung angeschlossene Kondensator übernimmt mittels eines Halbleiterschalters und kommutiert den Strom vom Thyristor 10 ab und wieder zurück zum Thyristor 10. Dies kann zu Spannungsspitzen und zu einer Fehlfunktion oder Beschädigung der Thyristoren oder der Feldwicklung des Generators führen.

SU 1 312 715 offenbart ein Erregersystem gemäß dem Obergriff von Anspruch 1. Zusätzlich offenbafrt EP0989667 eine Diode, die über einen Schalter parallel zu einem Kondensator geschaltet ist.

### DARSTELLUNG DER ERFINDUNG

Es ist Aufgabe der Erfindung, ein statisches Erregersystem mit der Möglichkeit der kurzzeitigen Erhöhung der Erregung ("excitation boosting") zu schaffen, welches die Nachteile bekannter Erregersysteme vermeidet und sich durch eine hohe Funktionssicherheit und einen einfachen und platzsparenden Aufbau auszeichnet, sowie ein Verfahren zu dessen Betrieb anzugeben.

Die Aufgabe wird durch die Gesamtheit der Merkmale der Ansprüche 1 und 14 bis 19 gelöst. Der Kern der Erfindung besteht darin, dass in dem statischen Erregersystem zweite Mittel zur Abgabe von elektrischer Energie vorgesehen sind, welche bei Bedarf kurzzeitig zusätzliche Energie in den Erregerkreis einspeisen, dass in den Erregerkreis eine in Durchlassrichtung gepolte Diode eingefügt ist, und dass die zweiten Mittel zur Einspeisung der Energie in den Erregerkreis an die Diode in Sperrrichtung gepolt anschliessbar sind.

Eine Ausgestaltung des erfindungsgemässen Systems zeichnet sich dadurch aus, dass die ersten Mittel einen an die Sammelschiene des Generators angeschlossenen Erregertransformator und eine an den Ausgang des Erregertransformators angeschlossene Gleichrichterschaltung umfassen, dass die Gleichrichterschaltung als steuerbare Gleichrichterschaltung, insbesondere als Thyristorbrücke, ausgebildet ist, dass zur Steuerung der Gleichrichterschaltung bzw. Thyristorbrücke ein automatischer Spannungsregler vorgesehen ist, dass der automatische Spannungsregler eingangsseitig über einen Spannungswandler an die Sammelschiene des Generators angeschlossen ist, dass die zweiten Mittel mittels eines steuerbaren Schalters an die Diode anschliessbar sind, dass der Schalter als Halbleiterschalter, insbesondere als Thyristor (Th), oder als abschaltbarer Halbleiterschalter, insbesondere als GTO oder IGBT, ausgebildet ist, und dass der Schalter nach Massgabe der Generatorspannung und/oder des Sollwertes des automatischen Spannungsreglers betätigbar ist.

Das Erregersystem muss nicht zwingend an die Generatorschiene angeschlossen sein. Es kann z.B. auch an das Kraftwerks-Eigennetz angeschlossen sein. Da dieses letztlich auch an das Netz angeschlossen ist, gilt dasselbe.

Eine weitere Ausgestaltung der Erfindung ist **dadurch gekennzeichnet, dass** die zweiten Mittel als aufladbare Kapazität ausgebildet sind, wobei insbesondere die Kapazität einen Kondensator oder mehrere Kondensatoren umfasst, welche in Serie und/oder in Reihe geschaltet sind. Besonders flexibel lässt sich die Einspeisung der Kondensatorenergie in den Erregerkreis gestalten, wenn die Kapazität mehrere Kondensatoren umfasst, welche mittels entsprechender Schalter unabhängig voneinander an die Diode anschliessbar sind.

Vorteilhaft hinsichtlich Platzbedarf, Energiedichte, Zuverlässigkeit und Anlagenkosten ist es, wenn der oder die Kondensatoren als elektrochemische Doppelschicht-Kondensatoren, auch Ultrakondensatoren oder Superkondensatoren genannt, mit einer spezifischen Energiedichte von 1 bis 10 Wh/kg ausgebildet sind. Zur Aufladung der Kapazität bzw. der Kondensatoren ist beispielsweise eine Ladeeinheit vorgesehen.

Soll die kurzzeitige Verstärkung der Erregung von einer zentralen Stelle aus gesteuert werden, ist es von Vorteil, wenn der Schalter für das Zuschalten der zweiten Mittel über einen Empfänger mittels eines drahtgebundenen oder Funksignals betätigbar ist.

### KURZE ERLÄUTERUNG DER FIGUREN

Die Erfindung soll nachfolgend anhand von Ausführungsbeispielen im Zusammenhang mit der Zeichnung näher erläutert werden. Es zeigen
- Fig. 1: ein vereinfachtes Schaltbild eines statischen Erregersystems nach dem Stand der Technik;
- Fig. 2: ein vereinfachtes Schaltbild eines statischen Erregersystems ge- mäss einem ersten Ausführungsbeispiel der Erfindung mit einer Kapazität als Energiequelle, die über einen Schalter in Sperrrich- tung gepolt an eine Diode im Erregerkreis anschliessbar ist;
- Fig. 3: beispielhafte Zeitverläufe der Feldspannung (U_{f}), des Feldstromes (I_{f}), der Kondensatorspannung (U_{C}), des Kondensatorstromes (I_{C}) und des Diodenstromes (I_{D}) nach dem Zuschalten der Kapazität (t_{ON}) und bis zum vollständigen Entladen der Kapazität (t');
- Fig. 4: in einer zu Fig. 3 vergleichbaren Darstellung beispielhafter Zeitver- läufe der Feldspannung (U_{f}), des Feldstromes (I_{f}), der Kondensa- torspannung (U_{C}), des Kondensatorstromes (I_{C}) und des Dioden- stromes (I_{D}) nach dem Zuschalten der Kapazität (t_{ON}) und bis zum vorzeitigen Abschalten der Kapazität (t_{OFF});
- Fig. 5: andere Ausführungsbeispiele der Erfindung, bei denen durch ei- nen Widerstand parallel zur Diode ein negativer Feldstrom und/oder eine veränderte Entladungszeit der Kapazität ermöglicht wird, die Kapazität aus einer Reihen- und/oder Serienschaltung einzelner Kondensatoren besteht, und als Schalter unterschiedli- che Halbleiterschalter (Thyristor, GTO, IGBT) eingesetzt werden;
- Fig. 6: die Parallelschaltung von unabhängig einschaltbaren Kondensato- ren zur Erzeugung einer sequentiellen Entladungskurve; und
- Fig. 7: eine Variante zu der in Fig. 6 dargestellten Schaltung.

### WEGE ZUR AUSFÜHRUNG DER ERFINDUNG

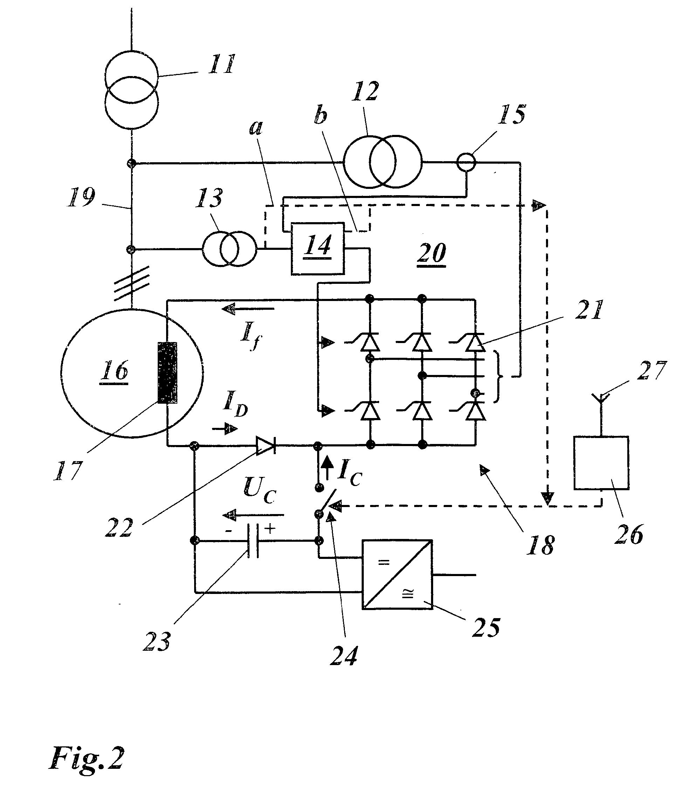

In Fig. 2 ist ein vereinfachtes Schaltbild eines statischen Erregersystems gemäss einem ersten Ausführungsbeispiel der Erfindung wiedergegeben. Ausgangspunkt ist wiederum ein Generator 16 mit einer Feldwicklung 17, der über eine Sammelschiene 19 und einen Maschinentransformator 11 an ein Netz angeschlossen ist. Die Feldwicklung wird von einem statischen Erregersystem 20 mit Feldstrom I_{f} versorgt, das im wesentlichen aus einem Erregertransformator 12 und einer nachfolgenden, mit Thyristoren 21 bestückten Thyristorbrücke 18 besteht. Die Ansteuerung der Thyristorbrücke 18 erfolgt durch einen automatischen Spannungsregler (AVR) 14, der als Eingangsgrössen einerseits über einen Spannungswandler 13 die an der Sammelschiene 19 anliegende Generatorspannung und andererseits über einen Stromwandler 15 den im Erregersystem fliessenden Strom erhält. Die Thyristorbrücke 18 ist ausgangsseitig an die Feldwicklung 17 angeschlossen und bildet mit dieser zusammen einen Erregerkreis.

In den Erregerkreis ist in Durchlassrichtung gepolt eine Diode 22 eingebaut. Parallel zur Diode 22 ist mittels eines Schalters 24 eine aufladbare Kapazität 23 anschliessbar, wobei die Polung der Kapazität 23 in Sperrrichtung der Diode 22 erfolgt. Die Kapazität 23 kann über eine angeschlossene Ladeeinheit 25 aufgeladen werden. Der Schalter 24 kann auf unterschiedliche Weise angesteuert werden, was in Fig. 2 durch verschiedene gestrichelte Linien angedeutet ist.

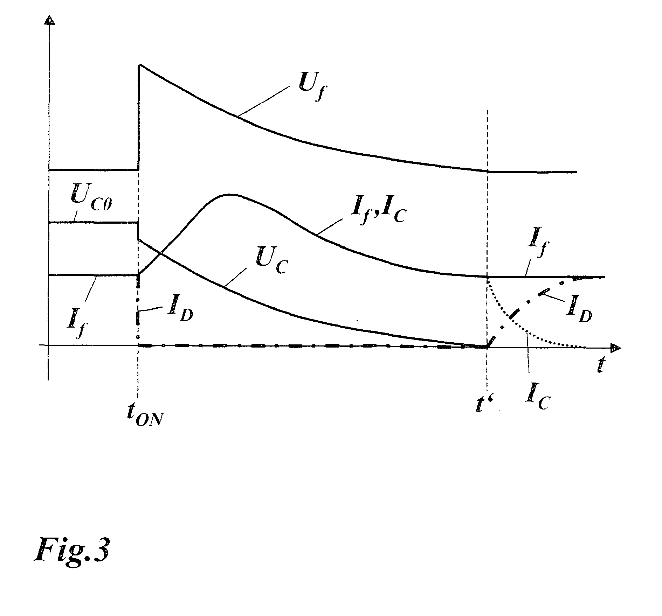

Während des normalen Betriebs leitet die Diode 22 den als Gleichstrom fliessenden Feldstrom I_{f} und übt keinerlei Einfluss auf die Funktion des Erregerkreises aus. Die beispielsweise aus sogenannten Ultra- oder Superkondensatoren aufgebaute Kapazität 23 wird durch die Ladeeinheit 25 auf einer vorbestimmten Kondensatorspannung U_{C0} gehalten. Die Polung der Kondensatorladung entspricht der Sperrrichtung der Diode 22. Wird der Schalter 24 geschlossen, wird zu der von der Thyristorbrücke 18 abgegebenen Spannung die Kondensatorspannung U_{C} addierend in Serie geschaltet, so dass insgesamt eine deutlich höhere Feldspannung U_{f} an der Feldwicklung 17 anliegt (Zeitpunkt t_{ON} in Fig. 3). Gleichzeitig sperrt die Diode 22 und der Diodenstrom I_{D} (strich-punktiert in Fig. 3) geht auf Null zurück. Im Folgenden wird aus Vereinfachungsgründen ein konstanter (eingefrorener) Steuerwinkel an der Thyristorbrücke 18 angenommen. Aufgrund der erhöhten Feldspannung U_{f} beginnt der Feldstrom I_{f} - verzögert durch die Induktivität der Feldwicklung 17 - anzusteigen. Das Einschalten des Schalters 24 kann dadurch getriggert werden, dass die Spannung am Spannungswandler 13 unter einen vorgegebenen Grenzwert fällt (gestrichelte Verbindung (a) in Fig. 2). Dies ermöglicht bei einem Absinken der Netzspannung eine Erhöhung der Erregerversorgung durch die in der Kapazität 23 gespeicherte Energie. Während die Energie in den Erregerkreis eingespeist wird, wird die Kapazität 23 kontinuierlich entladen (sinkende Kondensatorspannung U_{C} in Fig. 3), bis die Kondensatorspannung U_{C} Null ist (Zeitpunkt t' in Fig. 3). Die Diode 22 beginnt dann wieder zu leiten und die normale Erregerversorgung bleibt zurück.

Die Funktionsweise des AVR kann unverändert bestehen bleiben. Die zusätzliche Kondensatoreinspeisung wird über die immer vorhandene Erregerstrom-Erfassung im AVR mitverarbeitet.

Der gewünschte Spannungshub wird durch die Vorladung der Kapazität eingestellt. Die Ladespannung kann bis zu einem Mehrfachen, insbesondere bis zum 3-fachen, des Nennwertes der Erregerspannung betragen. Die gewünschte Dauer der Stützung wird über den Kapazitätswert eingestellt. Die installierte Stützzeit (t'-t_{ON}) bewegt sich im Bereich 1...20 s.

Wie bereits oben erwähnt worden ist, werden zur Bildung der Kapazität 23 beispielsweise Ultra- oder Superkondensatoren eingesetzt, wie sie beispielsweise unter der Markenbezeichnung BOOSTCAP™ von der Firma Maxwell Technologies mit der Typenbezeichnung BCA0010 oder PC2500 angeboten werden. Derartige Ultrakondensatoren, die beispielsweise bei einer Nennspannung von 2,5 V eine Kapazität von 2600 bzw. 2700 F aufweisen, haben verschiedene Vorteile: Sie sind 100-%ig wartungsfrei. Sie haben eine ausgezeichnete Leistungs- und Energiekapazität (10 mal besser als Elektrolytkondensatoren). Selbst wenn ein Kondensator ausfällt - was sehr unwahrscheinlich ist - können die Folgen durch einen modularen Aufbau mittels Reihen- und Serienschaltung einzelner Kondensatoren 29 (siehe Fig. 5) sehr gering gehalten werden. Grösse und Anzahl der Kondensatoren ergeben sich aus den Anforderungen an Spannungshub und Stützzeit.

Die Diode 22 wird beispielsweise als Scheibendiode eingebaut. Ein Versagen bewirkt ein inneres Kurzschliessen derselben, was sich auf das Funktionieren des Erregersystems nicht auswirkt. Der Schalter 24 kann mit einer Schmelzsicherung in Serie versehen werden, um gegen Zuschalten auf eine defekte Diode zu schützen

Die in letzter Zeit aufgetretenen Netzzusammenbrüche ("blackouts") haben gezeigt, dass die Möglichkeit einer kurzzeitig erhöhten Einspeisung von Blindleistung in die meist überlasteten Netze fehlt. Die weitverbreitete statische Erregung mit automatischem Spannungsregler AVR aus der Sammelschiene des Generators, die gezwungenermassen der absinkenden Netzspannung folgt, kann in einer solchen kritischen Situation keine kurzzeitige Erhöhung bereitstellen. Mit dem statischen Erregersystem der Erfindung ist dies jedoch auf einfache Weise durch kurzzeitiges Einspeisen gespeicherter Energie ohne weiteres möglich. In der genannten Zeit müssen natürlich Massnahmen zur Entlastung des Netzes getroffen werden. Solche sind z.B. Verbraucherwegschaltungen, Netzauftrennungen, Zuschalten von Reservegeneratoren.

Die Zusatzeinspeisung mittels Kapazität des erfindungsgemässen statischen Erregersystems hat die folgenden Eigenschaften und Vorteile:
- Sie beeinträchtigt nicht den guten Wirkungsgrad des Erregers
- Sie beeinflusst nicht die gute Zuverlässigkeit des Erregers, selbst wenn die Diode 22 und die Zusatzeinspeisung fehlerhaft arbeiten
- Sie beeinflusst nicht die Spannungsbelastung in der Thyristorbrücke
- Sie berührt nicht die Arbeit des automatischen Spannungsreglers, das Zuschalten wird unabhängig getriggert
- Sie kann aus standardisierten Komponenten modular aufgebaut werden, um auf einfache Weise den maximalen Zusatzstrom (engl.: "boost current") und die Zeitkonstante festzulegen
- Die Zusatzspannung ist eine reine abfallende Gleichspannung ohne Störspitzen; es gibt daher nur eine geringe zusätzliche Spannungsbelastung in der Feldwicklung während der Zuschaltphase
- Der Aufbau ist einfach und nimmt nur wenig Platz in Anspruch
- Die beispielsweise eingesetzten Ultrakondensatoren werden im Hinblick auf ihre Bedeutung in der Autoindustrie immer zuverlässiger und preiswerter
- Wenn die Einrichtung mit geringer Erdkapazität isoliert ist, werden die Wellenspannungen nicht beeinflusst
- Es stellt ein einfaches und robustes Nachrüstungspaket für bestehende Anlagen dar.

Wie bereits weiter oben beschrieben worden ist, kann der Schalter 24, der die Kapazität 23 an die Diode 22 anschliesst, durch eine Unterspannung am Generatorausgang getriggert werden (gestrichelte Verbindung (a) in Fig. 2). Es ist aber auch denkbar, den Schalter mit einer Kombination aus einem Unterspannungssignal und dem Sollwert des automatischen Spannungsreglers 14 zu triggern (gestrichelte Verbindungen (a) und (b) in Fig. 2). Weiterhin ist es denkbar, durch Zuschalten der Kapazität 23 die Erregungsgeschwindigkeit im Normalbetrieb zu erhöhen. Die Triggerung erfolgt dann durch den Sollwert des automatischen Spannungsreglers 14 (gestrichelte Verbindung (b) in Fig. 2). Schliesslich ist es möglich, die Kapazität 23 durch ein Signal zuzuschalten, das von einer Netzüberwachungszentrale im Falle einer Unterspannung oder eines zusätzlichen Bedarfs an Blindleistung ausgesendet wird und z.B. als Funksignal über eine Antenne 27 mittels eines Empfängers 26 empfangen wird (Fig. 2).

Die Kapazität 23 kann - wie dies in Fig. 5 dargestellt ist - durch Serien- und/oder Parallelschaltung einzelner Kondensatoren 29, beispielsweise in Form von Ultrakondensatoren, aufgebaut werden. Die Serienschaltung der Kondensatoren 29 kann dabei durch passive Symmetrierungsmittel (Widerstände 30 in Fig. 5) oder auch durch aktive Symmetrierungsmittel ergänzt werden. Weiterhin kann eine Sicherheitsentladung der Kondensatoren vorgesehen werden, wenn der Generator nicht in Betrieb ist, oder wenn die Türen des Schrankes, in dem die Kapazität 23 untergebracht ist, geöffnet werden. Schliesslich können modulare Kondensatorbänke zusammengeschaltet werden, um je nach Wünschen des Anwenders Zeitdauern der Entladung von über 10 Sekunden zu erreichen. Dies kann sogar soweit gehen, dass die Spannung des Erregertransformators 12 verringert wird, und der normale Plafondbetrieb ("ceiling") durch das Zuschalten der Kapazität 23 ausgeübt wird.

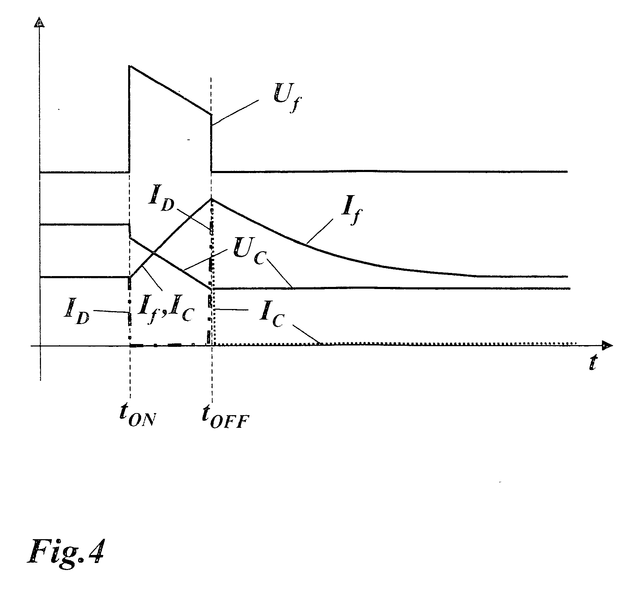

Wird - wie in Fig. 5 dargestellt - ein Widerstand 28 parallel zur Diode 22 geschaltet, kann einerseits ein negativer Feldstrom I_{f} übernommen werden. Dies erlaubt die Anwendung bei Erregersystemen mit antiparallelen Brücken zur Erzeugung eines bescheidenen negativen Feldstromes. Andererseits kann mit dem Widerstand 28, der beim Zuschalten der Kapazität 23 parallel liegt, die Zeitkonstante der Entladung beeinflusst und eingestellt werden. Der Widerstandswert bewegt sich in der Grössenordnung des Widerstandswertes der Feldwicklung 17. Als Schalter 24 kommen Thyristoren (Th), GTOs (Gate Turn Off Thyristoren) oder IGBTs (Insulated Gate Bipolar Transistors) in Betracht (Fig. 5). Mit einem herkömmlichen Thyristor (Th) ist nur eine vollständige Entladung der Kapazität möglich, da der Strom zum Löschen des Thyristors durch Null gehen muss. Mit einem (abschaltbaren) GTO oder IGBT kann die Einspeisung der gespeicherten Energie in den Erregerkreis zu beliebiger Zeit unterbrochen werden (t_{OFF} in Fig. 4).

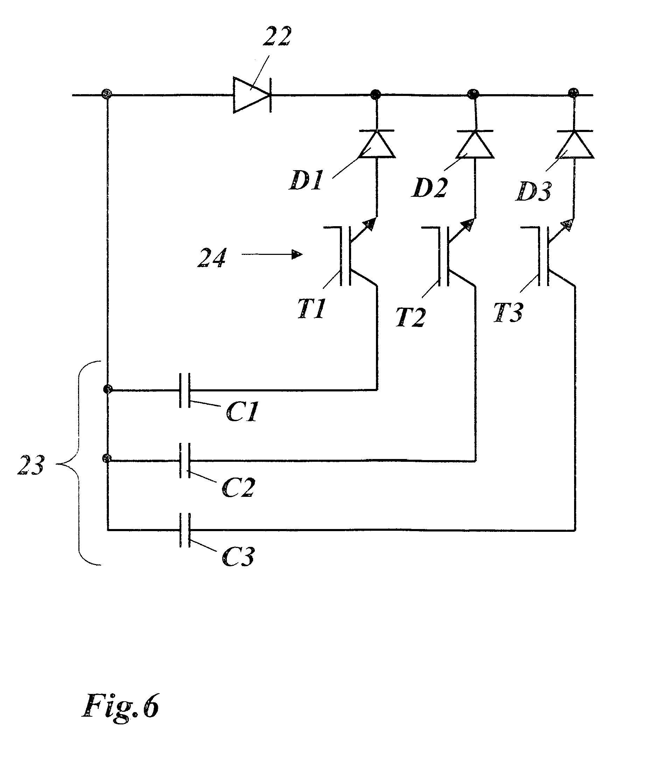

Gemäss Fig. 6 können innerhalb der Kapazität 23 mehrere Kondensatoren C1,..,C3 mit unterschiedlicher Kapazität und Ladespannung durch zugeordnete Schalter (IGBTs T1,..,T3) einzeln zuschaltbar angeordnet werden. Sie können beispielsweise sequentiell und/oder zeitlich überlagert zugeschaltet werden, um so einen vorbestimmten Verlauf des Erregerstromes zu erzeugen. Dioden D1,..,D3 schützen die IGBTs T1,..,T3 vor Rückwärtsspannungen.

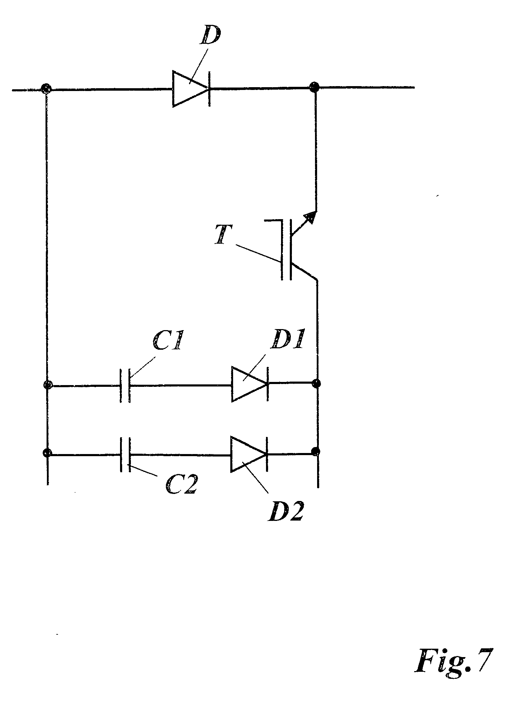

Als Beispiel: Der Kondensator C1 wird mit kleiner Kapazität und grosser Ladespannung versehen, die Kondensatoren C2 und C3 mit grösserer Kapazität und kleinerer Ladespannung. Mit dieser Kombination wird ein steiler Anstieg des Erregerstromes mit einer nachhaltigen Stützung verbunden. Der Kondensator C1 kann z.B. aus Folien- oder Elektrolytkondensatoren aufgebaut sein, der Kondensator C2 und der Kondensator C3 aus Superkondensatoren. Im beschriebenen Beispiel können alle IGBTs auch gleichzeitig eingeschaltet werden; die Stromablösungen erfolgen dann selbsttätig. Für diesen Fall ergibt eine Schaltungsvariante, wie in Fig. 7 gezeigt, eine Vereinfachung. Kondensator C1 hat eine hohe Ladespannung und kleine Kapazität, Kondensator C2 hat eine kleine Ladespannung und eine grössere Kapazität. Beide Kondensatoren sind über in Serie angeordnete Dioden D1 und D2 auf einen gemeinsamen Schalter, hier repräsentiert durch den IGBT T, verbunden.

Die Isolation der aus Diode 22, Kapazität 23 und Ladeeinheit 25 bestehenden Zusatzschaltung liegt auf demselben Niveau wie die Isolation der Erregerschaltung. Sie wird vorteilhaft so ausgeführt, dass sich eine geringe Kapazität gegen Erde ergibt.

Zweipolige mechanische Gleichstromschalter können die Kondensatoren 29 der Kapazität 23 von der Diode 22 und damit vom Erregerkreis trennen. Dadurch wäre gewährleistet, dass während des normalen Generatorbetriebes an der Zusatzschaltung Wartungsarbeiten durchgeführt werden können. Derartige Schalter können auch die Halbleiterschalter (Th, GTO, IGBT) ersetzen.

Die Ladeeinheit 25 kann aus einem Gleichstrom- oder Wechselstrom-Hilfsnetz des Kraftwerks oder aus dem Erregertransformator 12 des Generators 16 versorgt werden. Für einen 300 MVA-Generator gemäss dem nachfolgenden Dimensionierungsbeispiel beträgt die Ladeleistung ungefähr 1,5 kW während einer Stunde. Für schwierige Netze (repetitive Störungen) kann auch eine Hochstrom-Ladeeinheit vorgesehen werden, um die Kapazität 23 schneller nachladen zu können.

Für einen Generator mit einer Nennleistung von 300 MVA ist ein Erregersystem nach der Erfindung wie folgt dimensioniert worden, wobei als Einzelkondensator 29 ein BOOSTCAP™-Ultrakondensator mit einer Kapazität von 2600 F, einer Nennspannung von 2,5 V und einem Innenwiderstand von 1 mΩ zugrundegelegt worden ist (Annahme eines konstant bleibenden Steuerwinkels):

| **Grösse** | |
|---|---|
| Feldstrom I_{f} (Nennwert) | 1500 A |
| Feldspannung U_{f} (Nennwert) | 350 V |
| Feldwiderstand R_{f} | 0,23 Ω |
| Feldinduktivität L_{f} | 0,2 H |
| Kondensatorspannung U_{C0} | 500 V |
| Kapazität C | 30 F |
| Kondensatorzahl Serieschaltung | 250 |
| Anzahl Parallelzweige | 3 |
| Gesamtzahl Kondensatoren 29 | 750 |
| Max. Entladezeit (t'-t_{ON}) | ≈ 4 s |
| Max. Feldstrom Î_{f} | 2400 A |

Als Diode 22 kann beispielsweise eine Diode vom Typ 5SDD 60Q2800 der Firma ABB verwendet werden. Als Schalter 24 kann gemäss Fig. 5 entweder ein Thyristor vom Typ 5STP 45Q2800 der Firma ABB oder ein GTO vom Typ FG600AU-120D der Firma Mitsubishi Electric oder ein IGBT vom Typ FZ3600R17KE3 der Firma eupec eingesetzt werden. Selbst mit der angesetzten grosszügigen Bemessung ist dabei jeweils nur ein einziges Bauelement erforderlich. -

Figur 7 zeigt eine Variante der in Fig. 6 dargestellten Schaltung, bei welcher zwei unterschiedliche Kondensatoren (C1, C2) über einen gemeinsamen Schalter bzw. IGBT (T) zugeschaltet werden.

### BEZUGSZEICHENLISTE

- 10, 20: statisches Erregersystem
- 11: Maschinentransformator
- 12: Erregertransformator
- 13: Spannungswandler
- 14: automatischer Spannungsregler (AVR)
- 15: Stromwandler
- 16: Generator
- 17: Feldwicklung
- 18: Thyristorbrücke
- 19: Sammelschiene (Generator)
- 21: Thyristor
- 22: Diode
- 23: Kapazität
- 24: Schalter
- 25: Ladeeinheit
- 26: Empfänger
- 27: Antenne
- 28, 30: Widerstand
- 29: Kondensator
- C1, C2, C3: Kondensator
- D1, D2, D3: Diode
- I_{f}: Feldstrom
- I_{C}: Kondensatorstrom
- I_{D}: Diodenstrom
- U_{f}: Feldspannung
- U_{C}: Kondensatorspannung
- T, T1, T2, T3: IGBT
- Th: Thyristor

## Patentansprüche

1. Statisches Erregersystem (20) für die Feldwicklung (17) eines über eine Sammelschiene (19) an ein Netz angeschlossenen Generators (16), umfassend erste Mittel (12, 18, 21) zur Erzeugung einer Gleichspannung, welche mit der Feldwicklung (17) verbunden sind und zusammen mit der Feldwicklung (17) einen Erregerkreis bilden, sowie zweite Mittel (23; 29, C1,..,C3) zur Abgabe von elektrischer Energie, welche zweiten Mittel (23; 29, C1,..,C3) bei Bedarf kurzzeitig zusätzliche Energie in den Erregerkreis einspeisen, **dadurch gekennzeichnet, dass**
- in den Erregerkreis eine in Durchlassrichtung gepolte Diode (22) eingefügt ist,
- die zweiten Mittel (23; 29, C1...C3) zur Einspeisung der Energie in den Erregerkreis in Sperrrichtung der Diode (22) und parallel zur Diode (22) über einen Schalter (24) anschließbar sind,
- die zweiten Mittel (23; 29, C1...C3) als aufladbare Kapazität (23) ausgebildet sind,
- die Kapazität (23) mehrere Kondensatoren (C1 ,..,C3) umfasst, welche mittels entsprechender Schalter (24; T1 ,..,T3) unabhängig voneinander an die Diode (22) anschließbar sind.

2. Erregersystem nach Anspruch 1, **dadurch gekennzeichnet, dass** die ersten Mittel (12, 18, 21) einen an die Sammelschiene (19) des Generators (16) angeschlossenen Erregertransformator (12) und eine an den Ausgang des Erregertransformators (12) angeschlossene Gleichrichterschaltung (18, 21) umfassen.

3. Erregersystem nach Anspruch 2, **dadurch gekennzeichnet, dass** die Gleichrichterschaltung als steuerbare Gleichrichterschaltung, insbesondere als Thyristorbrücke (18), ausgebildet ist, dass zur Steuerung der Gleichrichterschaltung bzw. Thyristorbrücke (18) ein automatischer Spannungsregler (14) vorgesehen ist, und dass der automatische Spannungsregler (14) eingangsseitig über einen Spannungswandler (13) an die Sammelschiene (19) des Generators (16) angeschlossen ist.

4. Erregersystem nach Anspruch 3, **dadurch gekennzeichnet, dass** die zweiten Mittel (23; 29, C1,..,C3) mittels eines Schalters (24) an die Diode (22) anschliessbar sind.

5. Erregersystem nach Anspruch 4, **dadurch gekennzeichnet, dass** der Schalter (24) als Halbleiterschalter, insbesondere als Thyristor (Th), oder als abschaltbarer Halbleiterschalter, insbesondere als GTO oder IGBT, ausgebildet ist.

6. Erregersystem nach Anspruch 4 oder 5, **dadurch gekennzeichnet, dass** der Schalter (24) nach Massgabe der Generatorspannung und/oder des Sollwertes des automatischen Spannungsreglers (14) betätigbar ist.

7. Erregersystem nach Anspruch 1, **dadurch gekennzeichnet, dass** die Kapazität (23) einen Kondensator oder mehrere Kondensatoren (29; C1,..,C3) umfasst, welche in Serie und/oder in Reihe geschaltet sind.

8. Erregersystem nach Anspruch 7, **dadurch gekennzeichnet, dass** der oder die Kondensatoren (29; C1,..,C3) als Ultrakondensatoren oder Superkondensatoren mit einer spezifischen Energiedichte von 1 bis 10 Wh/kg ausgebildet sind.

9. Erregersystem nach Anspruch 1, **dadurch gekennzeichnet, dass** zur Aufladung der Kapazität (23) bzw. der Kondensatoren (29; C1,..,C3) eine Ladeeinheit (25) vorgesehen ist.

10. Erregersystem nach Anspruch 4 oder 5, **dadurch gekennzeichnet, dass** der Schalter (24) über einen Empfänger (26) mittels eines drahtgebundenen oder Funksignals betätigbar ist.

11. Erregersystem nach Anspruch 1, **dadurch gekennzeichnet, dass** parallel zur Diode (22) ein Widerstand angeordnet ist.

12. Verfahren zum Betrieb eines statischen Erregersystems (20) für die Feldwicklung (17) eines über eine Sammelschiene (19) an ein Netz angeschlossenen Generators (16), umfassend erste Mittel (12, 18, 21) zur Erzeugung einer Gleichspannung, welche mit der Feldwicklung (17) verbunden sind und zusammen mit der Feldwicklung (17) einen Erregerkreis bilden, sowie zweite Mittel (23; 29, C1,...,C3) zur Abgabe von elektrischer Energie, welche zweiten Mittel (23; 29, C1,...,C3) bei Bedarf kurzzeitig zusätzliche Energie in den Erregerkreis einspeisen,
**gekennzeichnet durch** folgende Schritte:
- Einfügen in den Erregerkreis einer in Durchlassrichtung gepolten Diode (22),
- Anschließen der zweiten Mittel (23; 29, C1...C3) in Sperrrichtung der Diode (22) und parallel zur Diode (22) über einen Schalter (24) zur Einspeisung der Energie in den Erregerkreis, wenn die Spannung am Erregertransformator (12) einen vorgegebenen Wert unterschreitet, wobei die zweiten Mittel (23; 29, C1...C3) als aufladbare Kapazität (23) ausgebildet sind, und wobei die Kapazität (23) mehrere Kondensatoren (C1 ,..,C3) umfasst,
- Anschließen der Kondensatoren (C1 ,..,C3) mittels entsprechender Schalter (24; T1 ,..,T3) unabhängig voneinander an die Diode (22).

13. Verfahren zum Betrieb eines Erregersystems nach Anspruch 12, **dadurch gekennzeichnet, dass** die zweiten Mittel (23; 29, C1,..,C3) nach Massgabe einer Unterspannung am Generator (16) und eines Sollwertes des automatischen Spannungsreglers (14) an die Diode (22) angeschlossen werden.

14. Verfahren zum Betrieb eines Erregersystems nach Anspruch 12, **dadurch gekennzeichnet, dass** die zweiten Mittel (23; 29, C1,..,C3) im Normalbetrieb zur Erhöhung der Erregungsgeschwindigkeit eingesetzt werden und dann nach Massgabe eines Sollwertes des automatischen Spannungsreglers (14) an die Diode (22) angeschlossen werden.

15. Verfahren zum Betrieb eines Erregersystems nach Anspruch 12, **dadurch gekennzeichnet, dass** das Netz, an welches der Generator (16) angeschlossen ist, von einer Zentrale überwacht wird, und dass beim Auftreten einer Unterspannung bzw. eines Bedarfs an reaktiver Leistung im Netz der Schalter (24) mittels eines drahtgebundenen oder Funksignals aus der Zentrale betätigt wird.

16. Verfahren zum Betrieb eines Erregersystems nach Anspruch 12, **dadurch gekennzeichnet, dass** die Kapazität (23) nach dem Anschliessen an die Diode (22) solange angeschlossen bleibt, bis sie entladen ist.

17. Verfahren zum Betrieb eines Erregersystems nach Anspruch 12, **dadurch gekennzeichnet, dass** die Kapazität (23) nach dem Anschliessen an die Diode (22) für einen vorgegebenen Zeitraum angeschlossen bleibt und dann die Verbindung zur Diode (22) wieder unterbrochen wird.

## Claims

1. Static exciter system (20) for the field winding (17) of a generator (16) which is connected to a grid system via a busbar (19) comprising first means (12, 18, 21) for production of a DC voltage, which are connected to the field winding (17) and together with the field winding (17) form an exciter circuit, as well as second means (23; 29, C1, ..., C3) for emission of electrical energy, which second means (23; 29, C1, ..., C3) briefly feed additional energy into the exciter circuit when required, **characterized in that**
- a forward-biased diode (22) is inserted into the exciter circuit,
- the second means (23; 29, C1, ..., C3) can be connected via a switch (24) in the reverse-biased direction of the diode (22) and in parallel with the diode (22) in order to feed energy into the exciter circuit,
- the second means (23; 29, C1, ..., C3) are formed by a chargeable capacitance (23),
- the capacitance (23) comprises a plurality of capacitors (C1, ..., C3), which can be connected to the diode (22) independently of one another by means of appropriate switches (24; T1, ..., T3).

2. Exciter system according to Claim 1, **characterized in that** the first means (12, 18, 21) comprise an exciter transformer (12), which is connected to the busbar (19) of the generator (16), and a rectifier circuit (18, 21) which is connected to the output of the exciter transformer (12).

3. Exciter system according to Claim 2, **characterized in that** the rectifier circuit is a controllable rectifier circuit, in particular a thyristor bridge (18), **in that** an automatic voltage regulator (14) is provided for control of the rectifier circuit or thyristor bridge (18), and **in that** the automatic voltage regulator (14) is connected on the input side via a voltage transformer (13) to the busbar (19) of the generator (16).

4. Exciter system according to Claim 3, **characterized in that** the second means (23; 29, C1, ..., C3) can be connected to the diode (22) by means of a switch (24).

5. Exciter system according to Claim 4, **characterized in that** the switch (24) is a semiconductor switch, in particular a thyristor (Th), or a semiconductor switch which can be switched off, in particular a GTO or IGBT.

6. Exciter system according to Claim 4 or 5, **characterized in that** the switch (24) can be operated on the basis of the generator voltage and/or of the set value of the automatic voltage regulator (14).

7. Exciter system according to Claim 1, **characterized in that** the capacitance (23) comprises one capacitor or a plurality of capacitors (29; C1, ..., C3) which is or are connected in series.

8. Exciter system according to Claim 7, **characterized in that** the capacitor or capacitors (29; C1, ..., C3) is or are in the form of ultracapacitors or supercapacitors having a specific energy density of 1 to 10 Wh/kg.

9. Exciter system according to Claim 1, **characterized in that** a charging unit (25) is provided in order to charge the capacitance (23) or the capacitors (29; C1, ..., C3).

10. Exciter system according to Claim 4 or 5, **characterized in that** the switch (24) can be operated via a receiver (26) by means of a wire-based signal or a radio signal.

11. Exciter system according to Claim 1, **characterized in that** a resistor is arranged in parallel with the diode (22).

12. Method for operation of a static exciter system (20) for the field winding (17) of a generator (16) which is connected to a grid system via a busbar (19) comprising first means (12, 18, 21) for production of a DC voltage, which are connected to the field winding (17) and together with the field winding (17) form an exciter circuit, as well as second means (23; 29, C1, ..., C3) for emission of electrical energy, which second means (23; 29, C1, ..., C3) briefly feed additional energy into the exciter circuit when required,
**characterized by** the following steps:
- insertion of a forward-biased diode (22) into the exciter circuit,
- connection of the second means (23; 29, C1, ..., C3) in the reverse-biased direction of the diode (22) and in parallel with the diode (22) via a switch (24) in order to feed energy into the exciter circuit when the voltage on the exciter transformer (12) is less than a predetermined value, with the second means (23; 29, C1, ..., C3) being a chargeable capacitance (23), and with the capacitance (23) comprising a plurality of capacitors (C1, ..., C3),
- connection of the capacitors (C1, ..., C3) by means of appropriate switches (24; T1, ..., T3), to the diode (22) independently of one another.

13. Method for operation of an exciter system according to Claim 12, **characterized in that** the second means (23; 29, C1, ..., C3) are connected to the diode (22) on the basis of an undervoltage at the generator (16) and of a set value of the automatic voltage regulator (14).

14. Method for operation of an exciter system according to Claim 12, **characterized in that** the second means (23; 29, C1, ..., C3) are used to increase the excitation rate during normal operation, and are then connected to the diode (22) on the basis of a set value of the automatic voltage regulator (14).

15. Method for operation of an exciter system according to Claim 12, **characterized in that** the grid system to which the generator (16) is connected is monitored by a control center, and **in that** the switch (24) is operated by means of a wire-based signal or a radio signal from the control center when an undervoltage occurs, or when there is a requirement for reactive volt-amperes in the grid system.

16. Method for operation of an exciter system according to Claim 12, **characterized in that** the capacitance (23) remains connected to the diode (22), after connection, until it has been discharged.

17. Method for operation of an exciter system according to Claim 12, **characterized in that** the capacitance (23) remains connected to the diode (22) for a predetermined time period after connection, and the connection to the diode (22) is then interrupted again.

## Revendications

1. Système (20) d'excitateur statique pour l'enroulement de champ (17) d'un générateur (16) raccordé à un réseau par un rail collecteur (19), le système comprenant des premiers moyens (12, 18, 21) qui forment une tension continue, qui sont reliés à l'enroulement de champ (17) et qui forment avec l'enroulement de champ (17) un circuit excitateur, ainsi que des deuxièmes moyens (23; 29, C1, ..., C3) qui délivrent de l'énergie électrique, ces deuxièmes moyens (23; 29, C1, ..., C3) injectant en cas de besoin et brièvement de l'énergie supplémentaire dans le circuit excitateur,
**caractérisé en ce que**
- une diode (22) polarisée dans le sens du passage est insérée dans le circuit excitateur,
- les deuxièmes moyens (23; 29, C1, ..., C3) qui injectent de l'énergie dans le circuit excitateur peuvent être raccordés dans la direction de blocage de la diode (22) et parallèlement à la diode (22) par l'intermédiaire d'un commutateur (24),
- les deuxièmes moyens (23; 29, C1, ..., C3) sont configurés comme capacités rechargeables (23),
- la capacité (23) comporte plusieurs condensateurs (C1, ..., C3) qui peuvent être raccordés à la diode (22) indépendamment les uns des autres au moyen de commutateurs (24; T1, ..., T3) respectifs.

2. Système d'excitateur selon la revendication 1, **caractérisé en ce que** les premiers moyens (12, 18, 21) comprennent un transformateur (12) d'excitateur raccordé au rail collecteur (19) du générateur (16) et un circuit redresseur (18, 21) raccordé à la sortie du transformateur (12) d'excitateur.

3. Système d'excitateur selon la revendication 2, **caractérisé en ce que** le circuit redresseur est configuré comme circuit redresseur asservi, en particulier comme pont (18) à thyristors, **en ce qu'**un régulateur automatique (14) de tension est prévu pour la commande du circuit redresseur ou du pont (18) à thyristors et **en ce que** le régulateur automatique (14) de tension est raccordé par son entrée au rail collecteur (19) du générateur (16) par l'intermédiaire d'un convertisseur de tension (13).

4. Système d'excitateur selon la revendication 3, **caractérisé en ce que** les deuxièmes moyens (23; 29, C1, ..., C3) peuvent être raccordés à la diode (22) au moyen d'un commutateur (24).

5. Système d'excitateur selon la revendication 4, **caractérisé en ce que** le commutateur (24) est configuré comme commutateur à semi-conducteur, en particulier comme thyristor (Th) ou comme commutateur débranchable, en particulier comme GTO ou IGBT.

6. Système d'excitateur selon les revendications 4 ou 5, **caractérisé en ce que** le commutateur (24) peut être activé en fonction de la tension du générateur et/ou de la valeur de consigne du régulateur automatique (14) de tension.

7. Système d'excitateur selon la revendication 1, **caractérisé en ce que** la capacité (23) comprend un condensateur ou plusieurs condensateurs (29; C1, ..., C3) qui est ou sont raccordés en série et/ou en parallèle.

8. Système d'excitateur selon la revendication 7, **caractérisé en ce que** le condensateur ou les condensateurs (29; C1, ..., C3) est ou sont configurés comme ultracondensateurs ou supercondensateurs dont la densité spécifique d'énergie est comprise entre 1 et 10 wh/kg.

9. Système d'excitateur selon la revendication 1, **caractérisé en ce qu'**une unité de chargement (25) est prévue pour charger la capacité (23) ou les condensateurs (29; C1, ..., C3).

10. Système d'excitateur selon les revendications 4 ou 5, **caractérisé en ce que** le commutateur (24) peut être actionné par l'intermédiaire d'un récepteur (26) au moyen d'un signal filaire ou radio.

11. Système d'excitateur selon la revendication 1, **caractérisé en ce qu'**une résistance est raccordée en parallèle à la diode (22).

12. Procédé de gestion d'un système statique d'excitateur (20) pour l'enroulement de champ (17) d'un générateur (16) raccordé à un réseau par l'intermédiaire d'un rail collecteur (19), le système comprenant des premiers moyens (12, 18, 21) qui forment une tension continue, qui sont raccordés à l'enroulement de champ (17) et forment avec l'enroulement de champ (17) un circuit excitateur, ainsi que des deuxièmes moyens (23; 29, C1, ..., C3) qui délivrent de l'énergie électrique, ces deuxièmes moyens (23; 29, C1, ..., C3) injectant en cas de besoin et brièvement de l'énergie supplémentaire dans le circuit excitateur,
**caractérisé par** les étapes suivantes :
- insertion d'une diode (22) polarisée dans le sens du passage dans le circuit excitateur,
- raccordement des deuxièmes moyens (23; 29, C1, ..., C3) dans le sens de blocage de la diode (22) et en parallèle à la diode (22) par l'intermédiaire d'un commutateur (24) pour injecter de l'énergie dans le circuit excitateur lorsque la tension aux bornes du transformateur (12) d'excitateur n'atteint pas une valeur prédéterminée, les deuxièmes moyens (23; 29, C1, ..., C3) étant configurés comme capacité rechargeable (23), la capacité (23) comportant plusieurs condensateurs (C1, ..., C3) et
- raccordement des condensateurs (C1, ..., C3) à la diode (22) indépendamment les uns des autres au moyen de commutateurs (24; T1, ..., T3) respectifs.

13. Procédé de gestion d'un système excitateur selon la revendication 12, **caractérisé en ce que** les deuxièmes moyens (23; 29, C1, ..., C3) sont raccordés à la diode (22) en fonction d'une sous-tension aux bornes du générateur (16) et d'une valeur de consigne du régulateur automatique (14) de tension.

14. Procédé de gestion d'un système excitateur selon la revendication 12, **caractérisé en ce que** les deuxièmes moyens (23; 29, C1, ..., C3) sont utilisés en fonctionnement normal pour augmenter la vitesse d'excitation et ensuite sont raccordés à la diode (22) en fonction d'une valeur de consigne du régulateur automatique (14) de tension.

15. Procédé de gestion d'un système excitateur selon la revendication 12, **caractérisé en ce que** le réseau auquel le générateur (16) est raccordé est surveillé par une centrale et **en ce qu'**en cas d'apparition d'une sous-tension ou d'un besoin de puissance réactive dans le réseau, le commutateur (24) est actionné au moyen d'un signal filaire ou radio provenant de la centrale.

16. Procédé de gestion d'un système excitateur selon la revendication 12, **caractérisé en ce que** la capacité (23) raccordée à la diode (22) reste raccordée jusqu'à être déchargée.

17. Procédé de gestion d'un système excitateur selon la revendication 12, **caractérisé en ce que** la capacité (23) raccordée à la diode (22) reste raccordée pendant une durée prédéterminée, sa liaison à la diode (22) étant ensuite interrompue.
